# EUROPEAN PATENT SPECIFICATION

(11) **EP 3 933 572 B1**
(45) Date of publication and mention of the grant of the patent: **30.08.2023**
(21) Application number: 21180512.2
(22) Date of filing: 21.06.2021
(51) Int. Cl.: G06F 8/65, G06F 8/656, G06F 8/61, G06F 11/20

(54) **SOFTWARE UPDATE DEVICE, SOFTWARE UPDATE METHOD, NON-TRANSITORY STORAGE MEDIUM, AND VEHICLE**
SOFTWARE-AKTUALISIERUNGSVORRICHTUNG, SOFTWARE-AKTUALISIERUNGSVERFAHREN, NICHTFLÜCHTIGES SPEICHERMEDIUM UND FAHRZEUG
DISPOSITIF DE MISE À JOUR DE LOGICIEL, PROCÉDÉ DE MISE À JOUR LOGICIEL, SUPPORT D'ENREGISTREMENT NON TRANSITOIRE ET VÉHICULE

(30) Priority: 02.07.2020 JP 2020114951
(43) Date of publication of application: 05.01.2022
(73) Proprietor: TOYOTA JIDOSHA KABUSHIKI KAISHA, Toyota-shi, Aichi-ken 471-8571 (JP)
(72) Inventor: SATOH, Yusuke, Toyota-shi, 471-8571 (JP); ISHIKAWA, Tomoyasu, Toyota-shi, 471-8571 (JP); FUKUYO, Satoru, Toyota-shi, 471-8571 (JP)
(74) Representative: J A Kemp LLP

(56) References cited:
- US-A1- 2014 137 091
- US-A1- 2016 266 886
- US-A1- 2017 355 381
- US-A1- 2019 034 191

## Description

### BACKGROUND OF THE INVENTION

### 1. Field of the Invention

The present disclosure relates to a software update device, a software update method, a non-transitory storage medium, and a vehicle.

### 2. Description of Related Art

A vehicle is equipped with a network system configured such that a plurality of in-vehicle devices called electronic control units (ECUs) is connected to each other via a communication line. Each of the in-vehicle devices transmits and receives a message to and from the other in-vehicle devices so as to share and execute functions of the vehicle.

The in-vehicle devices typically include a processor and a transitory storage unit such as random access memory (RAM) or a non-volatile storage unit such as flash read-only memory (ROM). A program (software) executed by the processor is stored in the non-volatile storage unit. Rewriting and updating of the program to a newer version makes it possible to upgrade and improve functions of the in-vehicle device.

Updating of the program involves a step of downloading in which update data is received from an external device (a center) via a wireless communication, etc., and a step of installation in which an update program (update software) is written in the storage unit of the in-vehicle device based on the downloaded data. There are two types of installation of the program, that is, an overwriting installation and a second bank side installation, depending on the specification of the in-vehicle device. The overwriting installation is an installation in which the current program (previous program) is overwritten with the downloaded update program in one region (single side: single-bank) that is determined as a region for storing the program from the entire memory region of the storage unit. The second bank side installation is an installation in which, of two regions (double sides: double-bank) that are determined as regions for storing the program, the downloaded update program is written into one of the regions (second bank side) that is not a region (first bank side) in which the current program (previous program) is stored.

In the case of the second bank side installation, the step of updating program involves an activation step of configurating a set value such as a start address of the update program such that the installed update program becomes executable, in addition to the steps of downloading and installation.

In relation to the program update of the ECU, Japanese Unexamined Patent Application Publication No. 2011-148398 (JP 2011-148398 A) discloses a technology that a specific ECU functions as a master ECU, communicates with a server, and updates the program of the master ECU and other slave ECUs.
US2016/266,886 discloses a software update device in accordance with the precharacterizing section of claim 1.

### SUMMARY OF THE INVENTION

During the program update, for example, during the overwriting installation of the program, or during the activation of the program installed through the second bank side installation, the in-vehicle device cannot execute the program and thus cannot operate, which may restrict functions of the vehicle.

As described above, during the program update, processing that may restrict the functions of the vehicle is executed. Therefore, a measure has been proposed in which the vehicle is prohibited from running during a period including a period in which the processing above is being executed.

However, for the purpose of convenience, it is desirable to maintain the functions of the vehicle as much as possible even during the program update.

In the related art, there is a room for improvement in that the functions of the vehicle are maintained as much as possible so as not to impair the convenience even during the program update.

The present disclosure provides a software update device, a software update method, a non-transitory storage medium, and a vehicle capable of maintaining the functions of the vehicle even during the program update of the in-vehicle device.

A software update device for mounting in a vehicle, the software update device according to a first aspect of the present invention includes: a communication unit configured to request a download of update data from a center; a storage unit configured to store the update data obtained by the download; and a first control unit configured to perform control such that, based on the update data, update software is installed in a single-bank type installation, or installed and activated in a double-bank-type installation, in at least one target electronic control unit among a plurality of electronic control units connected to each other via an in-vehicle network, wherein the single-bank type installation is an installation in which a current software is overwritten with the downloaded update data in one region that is determined as a region for storing the program from the entire memory region of the storage unit and the double-bank type installation is an installation in which, of two regions from the entire memory region of the storage unit that are determined as regions for storing the program, the downloaded update data is written into one of the regions that is not a region in which the current software is stored; and characterized by a second control unit configured to control execution of an alternative function that is a function equivalent to at least a part of a function controlled by the target electronic control unit when an operation of the target electronic control unit is restricted while the control is being performed by the first control unit; the first control unit is configured in the case of a double-bank type installation to write the downloaded update data into one of the regions that is not a region in which the current software is installed; and in that the execution of the alternative function is started and then: (i) in the case of a single-bank type installation execute installation by the first control unitby overwriting the downloaded update data in the one region that is determined as a region for storing the program ; and (ii) in the case of a double-bank type installation execute activation by the first control unit by configuring a start address of the downloaded update data such that the downloaded update data becomes executable.

A software update method according to a second aspect of the present invention is executed by a computer of a software update device mounted in a vehicle. The software update method includes: requesting a download of update data from a center; storing the update data obtained by the download; and performing update control such that, based on the update data, update software is installed in a single-bank type installation, or installed and activated in a double-bank type installation, in at least one target electronic control unit among a plurality of electronic control units connected to each other via an in-vehicle network, wherein the single-bank type installation is an installation in which a current software is overwritten with the downloaded update data in one region that is determined as a region for storing the program from the entire memory region of the storage unit and the double-bank type installation is an installation in which, of two regions from the entire memory region of the storage unit that are determined as regions for storing the program, the downloaded update data is written into one of the regions that is not a region in which the current software is stored; and characterized in that in the case of a double-bank type installation, writing the downloaded update data into one of the regions that is not a region in which the current software is installed; controlling execution of an alternative function that is a function equivalent to at least a part of a function controlled by the target electronic control unit when an operation of the target electronic control unit is restricted while the control to install or the update control is being performed; and by the controlling execution of an alternative function being started and then: (i) in the case of a single-bank type installation execute installation by overwriting the downloaded update data in the one region that is determined as a region for storing the program; and (ii) in the case of a double-bank type installation execute activation by configuring a start address of the downloaded update data such that the downloaded update data becomes executable.

A non-transitory storage device according to a third aspect of the present invention stores a software update program that are executable by one or more computers of a software update device and that cause the one or more computers to perform the software update method according to the second aspect.

A vehicle according to a fourth aspect of the present invention includes: the software update device according to the first aspect.

According to the present disclosed technology, even when the operation of the in-vehicle device is restricted due to the program update, the software update device controls the alternative function, whereby the function of the vehicle can be maintained.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a configuration diagram of a network system according to an embodiment;
FIG. 2 is a functional block diagram of a second control unit of a software update device according to the embodiment; and
FIG. 3 is a flowchart showing processing according to the embodiment.

### DETAILED DESCRIPTION OF EMBODIMENTS

### Configuration

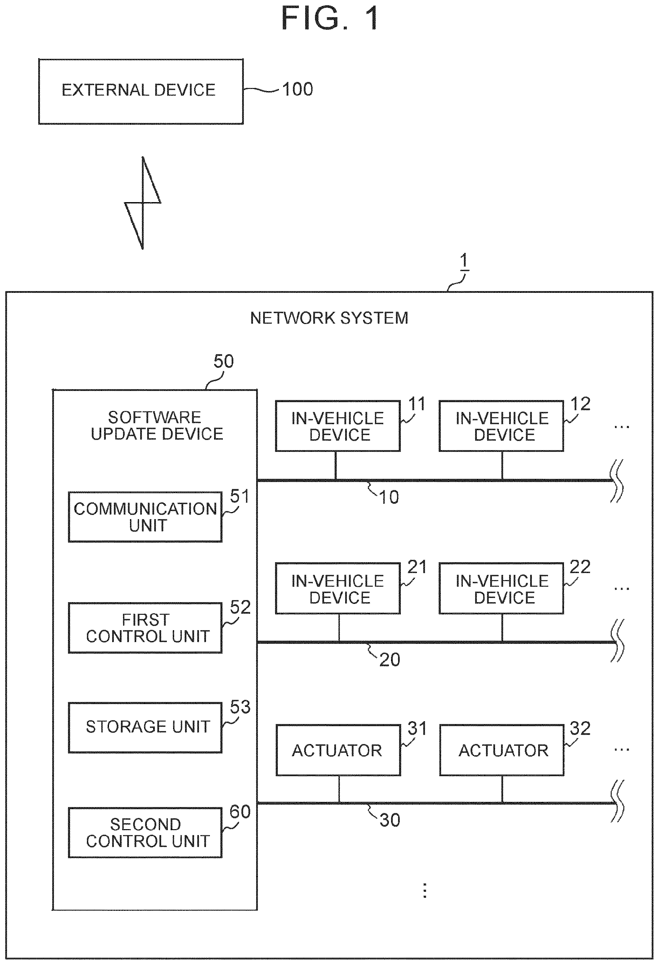

FIG. 1 shows a configuration example of a network system 1 according to an embodiment. The network system 1 is mounted on a vehicle. The network system 1 includes a software update device (over-the-air (OTA) master) 50. A plurality of buses 10, 20, 30, ... is connected to the software update device 50. A plurality of in-vehicle devices (electronic control units) 11, 12, ... is connected to the bus 10. A plurality of in-vehicle devices 21, 22 ... is connected to the bus 20. A plurality of actuators 31, 32 ... is connected to the bus 30. In FIG. 1 and the following description, the buses 10, 20, 30 are exemplified as the buses, the in-vehicle devices 11, 12, 21, 22 are exemplified as the in-vehicle devices, and the actuators 31, 32 are exemplified. However, the numbers of the buses, the in-vehicle devices, and the actuators are not limited.

The software update device 50 includes a communication unit (communication module) 51 that is communicable with an external device (center) 100 installed outside the vehicle, a storage unit (storage) 53 that stores various types of data, a second control unit 60, and a first control unit 52 that controls the components above. The first control unit 52 controls and relays communication between the external device 100 and the in-vehicle devices 11, 12, 21, 22, communication among the in-vehicle devices 11, 12, 21, 22, communication between the in-vehicle devices 11, 12, 21, 22 and the actuators 31, 32, via the buses 10, 20, 30. As described above, the software update device 50 also functions as a relay device that relays communication.

The in-vehicle devices 11, 12, 21, 22 communicate with each other and execute various types of processing for controlling the vehicle. The in-vehicle devices above include a non-volatile storage unit (one or more storages) such as a flash ROM, a control unit (one or more processors) that executes various types of processing by reading the program (software) from the non-volatile memory and executing the program, and a transitory storage unit that stores a part of the program and data, such as a RAM. Similarly, the software update device 50 also stores a program for the software update device 50 in the storage unit 53, and the first control unit (processor) 52 can execute the program by reading and executing the program. The in-vehicle devices 11, 12, 21, 22 and the software update device 50 can be implemented as a computer including the processor as described above.

The actuators 31, 32 are devices that generate mechanical actions with respect to the vehicle and components of the vehicle, such as a brake, an engine, or a power steering device, and operate based on commands from the in-vehicle devices 11, 12, 21, 22.

The first control unit 52 of the software update device 50 can update the programs stored in the respective storage units of the in-vehicle devices 11, 12, 21, 22. That is, the software update device 50 receives (downloads), from the external device 100, the transmitted update data (distribution package) for updating any of the programs of the in-vehicle devices 11, 12, 21, 22 and stores the update data. Further, the software update device 50 executes control to write (install) an update version of the program (update software) in the storage unit of the in-vehicle device to be updated based on the downloaded update data. Alternatively, the software update device 50 executes control to validate (activate) the update version of the program. A downloading sequence includes determination as to whether downloading is executable, execution of downloading, and verification of the update data, etc. An installation sequence includes determination as to whether installation is executable, execution of installation, transfer of the update data, and verification of the update version of program, etc. An activation sequence includes determination as to whether activation is executable, execution of activation, and verification of execution results, etc. Note that, the update processing of the program as described above can be executed continuously or in parallel with respect to the in-vehicle devices.

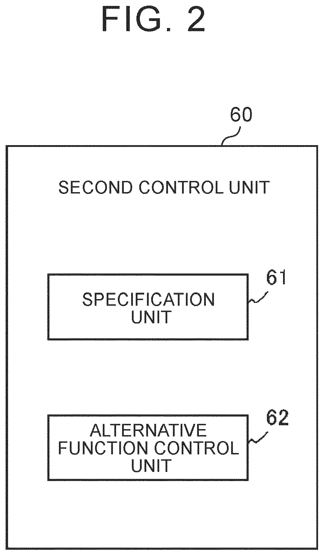

FIG. 2 shows a functional block of the second control unit 60. The second control unit 60 includes a specification unit 61 and an alternative function control unit 62. When the program is updated, the specification unit 61 specifies the in-vehicle device (target electronic control unit) of which operation is restricted by the installation processing or the activation processing among the in-vehicle devices 11, 12, 21, 22 because the in-vehicle device is subject to the program update. The alternative function control unit 62 controls execution of an alternative function that is a function equivalent to a part or all of the functions of the in-vehicle device, while the operation of the in-vehicle device specified by the specification unit 61 is restricted. Note that, the functions of each unit of the second control unit 60 may be realized by the first control unit 52.

### Processing

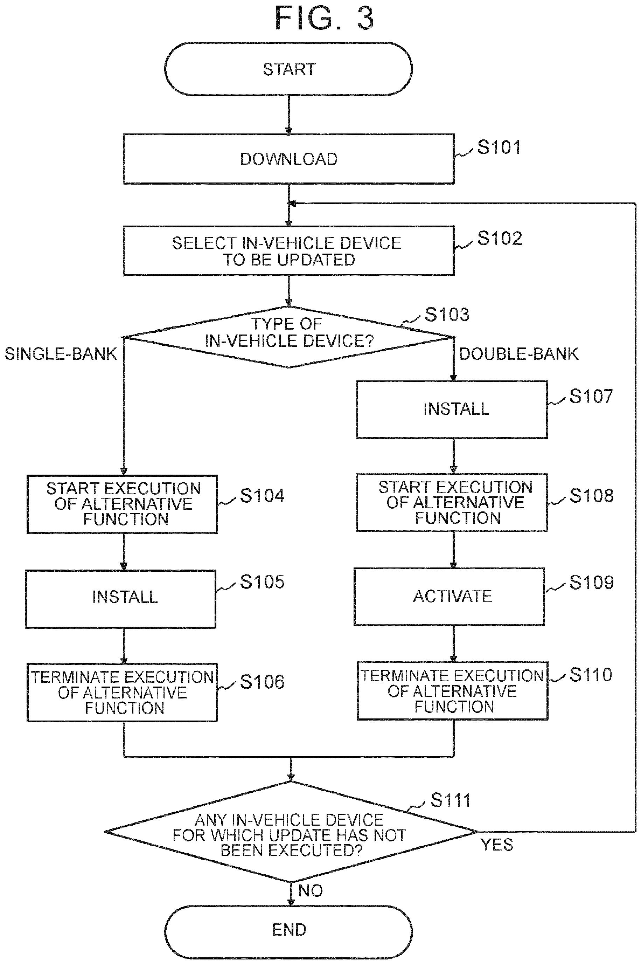

The details of the processing according to the embodiment will be described below. FIG. 3 shows a flowchart showing an example of the processing. The processing is executed in a manner such that the first control unit 52 inquires the external device 100 whether there is a program update of one or more in-vehicle devices, and when there is the program update, the processing is started as the first control unit 52 requests a download from the external device 100.

### Step S101

The communication unit 51 receives the update data of one or more in-vehicle devices from the external device 100, and the storage unit 53 stores (downloads) the update data. The update data is data used to generate the update program. The content and format of the upload data are not limited. For example, the update data includes the update program itself, difference data for generating the update program, or compressed data or divided data of the update program, etc. Further, the update data may include an identifier (ECU ID) of the in-vehicle device (target electronic control unit) of which program is to be updated and an identifier (WCU software ID) of the version of the program before the update.

### Step S102

The first control unit 52 specifies the in-vehicle devices of which program is to be updated based on the downloaded update data, and selects one of the in-vehicle devices for which the processing in subsequent step S105 is not executed, or the processing in steps S107 and S109 are not executed.

### Step S103

The first control unit 52 determines the type of a program update method of the selected in-vehicle device (the single-bank (overwriting installation) type or the double-bank (second bank side installation) type). The first control unit 52 may inquire the in-vehicle device for the installation type, or the software update device 50 may hold the installation type in advance. In the case of the single-bank type installation, the processing proceeds to step S104, and in the case of the double-bank type installation, the processing proceeds to step S107.

### Step S104

The alternative function control unit 62 starts control for executing the alternative function of the selected in-vehicle device. The alternative function means a function equivalent to a part or all of the functions of the in-vehicle device of which operation is restricted. Note that, execution of the alternative function may not be required depending on the function of the in-vehicle device. In this case, the alternative function control unit 62 does not execute any particular processing. The specification unit 61 determines whether to execute the alternative function. For example, when the selected in-vehicle device is the in-vehicle device predetermined as the in-vehicle device that requires execution of the alternative function, the specification unit 61 specifies that in-vehicle device as the in-vehicle device of which operation is restricted to update its program.

The alternative function control unit 62 causes another in-vehicle device that is capable of executing the alternative function to execute the alternative function, instead of the selected in-vehicle device of which operation is restricted. For example, the alternative function control unit 62 specifies the in-vehicle device to execute the alternative function based on a predetermined correspondence between the in-vehicle device of which operation is restricted and another in-vehicle device that is capable of executing the alternative function. Examples of the alternative function will be described later.

### Step S105

The first control unit 52 causes the selected in-vehicle device to execute the overwriting installation described above. The operation of the in-vehicle device above is restricted because there is no program executable during the overwriting installation. When the update data includes the update program itself in the overwriting installation processing, the first control unit 52 transmits the update program to the in-vehicle device. Further, when the update data includes the compressed data, the difference data, or the divided data of the update program, the first control unit 52 may generate the update program by decompressing or assembling the update data, and transmit the generated update program to the in-vehicle device. Alternatively, the first control unit 52 may transmit the update data to the in-vehicle device, and the in-vehicle device may generate the update program by decompressing or assembling the update data. The same applies to the second bank side installation to be described later.

### Step S 106

When the alternative function control unit 62 starts the execution control of the alternative function in step S104, the alternative function control unit 62 terminates the execution control. Note that, the alternative function control unit 62 preferably terminates the execution control of the alternative function after the alternative function control unit 62 confirms that the in-vehicle device of which operation has been restricted now operates normally. After step S106, the processing proceeds to step S111.

### Step S107

The first control unit 52 transmits data indicating the update program of the selected in-vehicle device to the corresponding in-vehicle device, and causes the in-vehicle device to execute the second bank side installation described above. Note that the current program of the in-vehicle device remains without being erased even during the second bank side installation processing, and the in-vehicle device can continue operation by executing the remaining current program.

### Step S108

In the same manner as in step S104, the execution control of the alternative function is started.

### Step S109

The first control unit 52 causes the selected in-vehicle device to execute the activation described above. The selected in-vehicle device is undergoing the configuration to switch the program to be executed during the activation. Therefore, the operation of the in-vehicle device is restricted.

### Step S110

In the same manner as in step S106, the execution control of the alternative function is terminated.

### Step S111

When there is any in-vehicle device for which the processing in step S105 has not been executed or the processing in steps S107 and S109 has not been executed among the in-vehicle devices to be updated in the program specified in step S102, the processing returns to step S102, and when not, the processing is terminated.

The above processing is an example and can be changed as appropriate. Further, when there is no in-vehicle device having the alternative function with respect to the in-vehicle device of which operation is restricted, the software update device 50 records the corresponding in-vehicle device, and while the vehicle is in a non-traveling state when the ignition (power) is turned off, or when the ignition (power) is once turned off and then turned on again, for example, the software update device 50 executes the overwriting installation (in the case of single-bank) or the activation (in the case of double-bank) of the corresponding in-vehicle device. Note that, the external device 100 and the software update device 50 may explicitly issue a command to the in-vehicle device to execute the installation and the activation and the in-vehicle device may execute the installation and the activation based on the command, or the in-vehicle device that has received the update data (or the update program) may autonomously execute the installation and the activation without any explicit command.

An example of the alternative function will be described below. For example, when the operation of the in-vehicle device that controls a parking brake to maintain the vehicle in a stationary state is restricted, the alternative function control unit 62 causes the in-vehicle device that controls a service brake to control the service brake as the alternative function, thereby maintaining the stationary state of the vehicle. This makes it possible to update the program of the in-vehicle device that controls the parking brake even when the vehicle is required to maintain the stationary state in terms of the specifications while the program is being updated.

Further, in a hybrid vehicle, when the operation of the in-vehicle device that controls the engine is restricted, the alternative function control unit 62 causes a motor to generate a driving force as the alternative function to generation of the driving force using the engine. This makes it possible to update the program of the in-vehicle device that controls the engine without stopping the vehicle.

Further, when the operation of the in-vehicle device that controls the power steering is restricted, the alternative function control unit 62 causes the in-vehicle device that controls a power output distribution to right and left wheels to perform steering using a difference in power between the right and left wheels as the alternative function of the steering by the power steering. This makes it possible to update the program of the in-vehicle device that controls the power steering without stopping the vehicle.

As described above, when the vehicle includes two or more in-vehicle devices having functions (motion functions) of driving, braking, and steering (that is, the two or more in-vehicle devices control these functions), and when the in-vehicle device of which operation is restricted is the in-vehicle device that controls any of the functions of driving, braking, and steering of the vehicle, the alternative function control unit 62 can cause another in-vehicle device having the same function to execute the function as the alternative function. This makes it possible for the in-vehicle device having a minimum necessary function for traveling the vehicle to update the program without stopping the vehicle.

Further, when the vehicle includes two or more in-vehicle devices having various driver assistance functions such as an advanced safety function and the in-vehicle device of which operation is restricted is the in-vehicle device having the driver assistance function above, the alternative function control unit 62 can cause another in-vehicle device having an equivalent function to execute the function as the alternative function. This makes it possible for the in-vehicle device having the driver assistance function to update the program without stopping the vehicle. For example, in relation to suppression of lane departure, a lane departure alert (LDA) function can be the alternative function to a lane keep assist (LKA) function. Further, in relation to suppression of a collision, an autonomous driving function can be the alternative function to a pre-crash safety system (PCS) function.

Further, when the vehicle includes two or more in-vehicle devices having a function of performing peripheral monitoring of the vehicle and the in-vehicle device of which operation is restricted is the in-vehicle device having the function of peripheral monitoring above, the alternative function control unit 62 can cause another in-vehicle device having an equivalent function to execute the function as the alternative function. This makes it possible for the in-vehicle device having the function of peripheral monitoring to update the program without stopping the vehicle. For example, the function of a camera can be the alternative function to a light detection and ranging (LiDAR; remote sensing using light) function.

Note that, for example, basic functions of the in-vehicle devices provided as standard in the vehicle and extended functions additionally achieved by retrofit in-vehicle device installed in the vehicle can be combined to function as the alternative functions to each other.

The performance of the alternative function may be more limited compared to the performance of the original function. Therefore, the alternative function may be executed only in the case of an emergency. For example, the alternative function control unit 62 may acquire, from sensors and the in-vehicle devices provided for the vehicle, information indicating that a user has performed a predetermined operation indicating that an urgent matter arises, and execute the alternative function based on the acquired information. The predetermined operation is not particularly limited. For example, examples of the predetermined operation include an operation to turn a steering wheel by a predetermined angle or more while the vehicle is stopped.

The examples above are the examples in which the alternative function control unit 62 causes another in-vehicle device that is capable of executing the alternative function to execute the alternative function, instead of the in-vehicle device of which operation is restricted. As another example, the second control unit 60 may be preliminarily provided with a part of or all of the functions of the in-vehicle device of which operation is restricted as the function of the software update device, and the alternative function control unit 62 itself may execute the function as the alternative function to a part or all of the functions of the in-vehicle device of which operation is restricted and issue a command to the actuators.

For example, the alternative function control unit 62 may be capable of executing a predetermined function, such as a minimum necessary function related to driving, braking, or steering, in advance. The above can be executed in such a manner that the storage unit 53 stores a program for executing the function above and the alternative function control unit 62 executes the program when the operation of the in-vehicle device having the function above is restricted.

Alternatively, the alternative function control unit 62 may acquire an identifier of the in-vehicle device of which operation is restricted from the first control unit 52, copy the current program (the program before update) stored in the in-vehicle device to the storage unit 53 before the overwriting installation or the activation is started, and execute the copied program.

Further alternatively, the alternative function control unit 62 may generate a program after the update during which the operation is restricted based on the update data downloaded from the external device 100 and stored in the storage unit 53, and execute the updated program. The alternative function control unit 62 may not necessarily control the alternative functions to the functions of all of the in-vehicle devices. The execution control of the alternative function has a significant effect of maintaining convenience even with a limited function such as a minimum necessary function for traveling the vehicle as described above.

After the step above, the processing proceeds to step S101. When the program update of the in-vehicle device of which operation is restricted is completed, the operation restriction is canceled. In step S101, the alternative function control unit 62 stops the control of the alternative function with respect to the in-vehicle device of which the operation restriction has been canceled. Subsequently, the above routine of processing is repeated.

In the embodiment above, the second control unit 60 is provided in the software update device 50. However, the second control unit 60 may be provided in any of the in-vehicle devices 11, 12, 21, 22, or may be provided as an independent in-vehicle device.

### Effect

According to the embodiment, the alternative function to the function of the in-vehicle device of which operation is restricted due to the program update can be executed, and even during the program update, the functions of the vehicle can be maintained as much as possible and a loss of convenience of the vehicle can be suppressed.

Further, when the software update device itself is allowed to execute the alternative function, there is no need for specifying the in-vehicle device having the alternative function from among the in-vehicle devices included in the network system 1. Therefore, the alternative function can be controlled without depending on the in-vehicle device configuration of the network system 1, which makes it easier to design and implement the software update device.

The disclosed technology can be interpreted as, in addition to the software update device, a network system including the software update device, a method executed by a computer included in the software update device, a program and a computer-readable non-transitory storage medium that stores the program, and a vehicle provided with the software update device, etc. The disclosed technology can be applied to a network system other than the network system mounted on a vehicle.

The disclosed technology is useful for network systems mounted on vehicles, etc.

## Claims

1. A software update device (50) for mounting in a vehicle, the software update device (50) comprising:
a communication unit (51) configured to request a download of update data from a center;
a storage unit (53) configured to store the update data obtained by the download; and
a first control unit (52) configured to perform control such that, based on the update data, update software is installed in a single-bank type installation, or installed and activated in a double-bank type installation, in at least one target electronic control unit among a plurality of electronic control units (11, 12, 21, 22) connected to each other via an in-vehicle network, wherein the single-bank type installation is an installation in which a current software is overwritten with the downloaded update data in one region that is determined as a region for storing the program from the entire memory region of the storage unit and the double-bank type installation is an installation in which, of two regions from the entire memory region of the storage unit that are determined as regions for storing the program, the downloaded update data is written into one of the regions that is not a region in which the current software is stored; and
**characterized by**:
a second control unit (60) configured to control execution of an alternative function that is a function equivalent to at least a part of a function controlled by the target electronic control unit when an operation of the target electronic control unit is restricted while the control is being performed by the first control unit (52);
the first control unit (52) is configured in the case of a double-bank type installation to write the downloaded update data into one of the regions that is not a region in which the current software is installed; and
in that the execution of the alternative function is started and then:
(i) in the case of a single-bank type installation execute installation by the first control unit (52) by overwriting the downloaded update data in the one region that is determined as a region for storing the program; and
(ii) in the case of a double-bank type installation execute activation by the first control unit (52) by configuring a start address of the downloaded update data such that the downloaded update data becomes executable.

2. The software update device (50) according to claim 1, wherein the second control unit (60) is configured to cause at least one of the electronic control units other than the target electronic control unit to execute the alternative function.

3. The software update device (50) according to claim 1, wherein:
the electronic control units (11, 12, 21, 22) include two or more electronic control units configured to control motion functions of driving, braking, and steering of a vehicle; and
the second control unit (60) is configured to cause, when the target electronic control unit is the electronic control unit configured to control at least one of the motion functions of driving, braking, and steering of the vehicle, the electronic control unit configured to control the at least one of the motion functions other than the target electronic control unit to execute the at least one of the motion functions as the alternative function.

4. The software update device (50) according to claim 2, wherein the second control unit (60) is configured to cause the electronic control unit other than the target electronic control unit to execute the function as the alternative function on condition that a predetermined operation by a user is received.

5. The software update device (50) according to claim 3, wherein the second control unit (60) is configured to cause the electronic control unit configured to control a service brake to control the service brake such that the vehicle is maintained in a stationary state when the target electronic control unit is an in-vehicle device configured to control a parking brake such that the vehicle is maintained in the stationary state.

6. The software update device (50) according to claim 1, wherein
the electronic control units (11, 12, 21, 22) include two or more electronic control units configured to control a function of driver assistance, and
the second control unit (60) is configured to cause when the target electronic control unit is the electronic control unit configured to control the function of driver assistance, the electronic control unit configured to control the function of driver assistance other than the target electronic control unit to execute the function of driver assistance as the alternative function.

7. The software update device (50) according to claim 1, wherein:
the electronic control units (11, 12, 21, 22) include two or more electronic control units configured to control a function of peripheral monitoring; and
the second control unit (60) is configured to cause, when the target electronic control unit is the electronic control unit configured to control the function of peripheral monitoring, the electronic control unit configured to control the function of peripheral monitoring other than the target electronic control unit to execute the function of peripheral monitoring as the alternative function.

8. The software update device (50) according to claim 1, wherein the second control unit (60) is configured to execute the alternative function by executing a function provided as a function of the software update device (50).

9. The software update device (50) according to claim 1, wherein the second control unit (60) is configured to
acquire, from the target electronic control unit, software of the target electronic control unit before the update software is installed, or installed and activated, and
execute the alternative function executing the software that is acquired.

10. A software update method executed by a computer of a software update device (50) mounted in a vehicle, the method comprising:
requesting a download of update data from a center;
storing the update data obtained by the download;
performing update control such that, based on the update data, update software is installed in a single-bank type installation, or installed and activated in a double-bank type installation, in at least one target electronic control unit among a plurality of electronic control units (11, 12, 21, 22) connected to each other via an in-vehicle network, wherein the single-bank type installation is an installation in which a current software is overwritten with the downloaded update data in one region that is determined as a region for storing the program from the entire memory region of the storage unit and the double-bank type installation is an installation in which, of two regions from the entire memory region of the storage unit that are determined as regions for storing the program, the downloaded update data is written into one of the regions that is not a region in which the current software is stored; and
**characterized by**:
in the case of a double-bank type installation, writing the downloaded update data into one of the regions that is not a region in which the current software is installed;
controlling execution of an alternative function that is a function equivalent to at least a part of a function controlled by the target electronic control unit when an operation of the target electronic control unit is restricted while the update control is being performed; and
by the controlling execution of an alternative function being started and then:
(i) in the case of a single-bank type installation execute installation by overwriting the downloaded update data in the one region that is determined as a region for storing the program; and
(ii) in the case of a double-bank type installation execute activation by configuring a start address of the downloaded update data such that the downloaded update data becomes executable.

11. A non-transitory storage medium storing a software update program that are executable by one or more computers of a software update device and that cause the one or more computers to perform the software update method according to claim 10.

12. A vehicle comprising the software update device according to any one of claims 1 to 9.

## Patentansprüche

1. Software-Aktualisierungsvorrichtung (50) zum Einbau in ein Fahrzeug, wobei die Software-Aktualisierungsvorrichtung (50) Folgendes umfasst:
eine Kommunikationseinheit (51), die dafür konfiguriert ist, einen Download von Aktualisierungsdaten von einem Zentrum anzufordern;
eine Speichereinheit (53), die dafür konfiguriert ist, die durch den Download erhaltenen Aktualisierungsdaten zu speichern; und
eine erste Steuereinheit (52), die dafür konfiguriert ist, eine Steuerung durchzuführen, so dass, basierend auf den Aktualisierungsdaten, Aktualisierungs-Software in einer Installation des Einzelbank-Typs installiert wird, oder in einer Installation des Doppelbank-Typs installiert und aktiviert wird, und zwar in mindestens einer elektronischen Ziel-Steuereinheit unter einer Vielzahl von elektronischen Steuereinheiten (11, 12, 21, 22), die über ein fahrzeuginternes Netzwerk miteinander verbunden sind, wobei es sich bei der Einzelbank-Installation um eine Installation handelt, bei der eine aktuelle Software mit den heruntergeladenen Aktualisierungsdaten in einem Bereich überschrieben wird, der als ein Bereich zum Speichern des Programms aus dem gesamten Speicherbereich der Speichereinheit bestimmt ist, und es sich bei der Doppelbank-Installation um eine Installation handelt, bei der von zwei Bereichen aus dem gesamten Speicherbereich der Speichereinheit, die als Bereiche zum Speichern des Programms bestimmt sind, die heruntergeladenen Aktualisierungsdaten in einen der Bereiche geschrieben werden, der nicht ein Bereich ist, in dem die aktuelle Software gespeichert ist; und
**gekennzeichnet durch**:
eine zweite Steuereinheit (60), die für Folgendes konfiguriert ist: Steuern der Ausführung einer alternativen Funktion, die eine Funktion ist, die zumindest einem Teil einer Funktion entspricht, die durch die elektronische Zielsteuereinheit gesteuert wird, wenn ein Betrieb der elektronischen Zielsteuereinheit eingeschränkt ist, während die Steuerung durch die erste Steuereinheit (52) durchgeführt wird;
wobei die erste Steuereinheit (52) im Fall einer Installation vom Doppelbank-Typ dafür konfiguriert ist, die heruntergeladenen Aktualisierungsdaten in einen der Bereiche zu schreiben, der nicht ein Bereich ist, in dem die aktuelle Software installiert ist; und
dass die Ausführung der alternativen Funktion gestartet wird und dann:
(i) im Fall einer Installation vom Einzelbank-Typ, Ausführen der Installation durch die erste Steuereinheit (52) durch Überschreiben der heruntergeladenen Aktualisierungsdaten in den einen Bereich, der als ein Bereich zum Speichern des Programms bestimmt ist; und
(ii) im Fall einer Doppelbank-Installation, Ausführen der Aktivierung durch die erste Steuereinheit (52), indem eine Startadresse der heruntergeladenen Aktualisierungsdaten so konfiguriert wird, dass die heruntergeladenen Aktualisierungsdaten ausführbar werden.

2. Software-Aktualisierungsvorrichtung (50) nach Anspruch 1, wobei die zweite Steuereinheit (60) dafür konfiguriert ist, mindestens eine der elektronischen Steuereinheiten, die nicht die elektronische Zielsteuereinheit ist, zu veranlassen, die alternative Funktion auszuführen.

3. Software-Aktualisierungsvorrichtung (50) nach Anspruch 1, wobei:
die elektronischen Steuereinheiten (11, 12, 21, 22) zwei oder mehr elektronische Steuereinheiten umfassen, die dafür konfiguriert sind, Bewegungsfunktionen des Fahrens, Bremsens und Lenkens eines Fahrzeugs zu steuern; und
wenn die elektronische Zielsteuereinheit die elektronische Steuereinheit ist, die dafür konfiguriert ist, mindestens eine der Bewegungsfunktionen des Fahrens, Bremsens und Lenkens des Fahrzeugs zu steuern, die zweite Steuereinheit (60) dafür konfiguriert ist, die elektronische Steuereinheit, die dafür konfiguriert ist, die mindestens eine der Bewegungsfunktionen anders als die elektronische Zielsteuereinheit zu steuern, zu veranlassen, die mindestens eine der Bewegungsfunktionen als die alternative Funktion auszuführen.

4. Software-Aktualisierungsvorrichtung (50) nach Anspruch 2, wobei die zweite Steuereinheit (60) dafür konfiguriert ist, die elektronische Steuereinheit, die nicht die elektronische Zielsteuereinheit ist, zu veranlassen, die Funktion als die alternative Funktion auszuführen, wenn eine vorbestimmte Bedienung durch einen Benutzer empfangen wird.

5. Software-Aktualisierungsvorrichtung (50) nach Anspruch 3, wobei die zweite Steuereinheit (60) dafür konfiguriert ist, die elektronische Steuereinheit, die zur Steuerung einer Betriebsbremse konfiguriert ist, zu veranlassen, die Betriebsbremse so zu steuern, dass das Fahrzeug in einem stationären Zustand gehalten wird, wenn die elektronische Zielsteuereinheit eine fahrzeuginterne Vorrichtung ist, die zur Steuerung einer Feststellbremse konfiguriert ist, so dass das Fahrzeug in dem stationären Zustand gehalten wird.

6. Software-Aktualisierungsvorrichtung (50) nach Anspruch 1, wobei
die elektronischen Steuereinheiten (11, 12, 21, 22) zwei oder mehr elektronische Steuereinheiten umfassen, die zur Steuerung einer Funktion der Fahrerassistenz konfiguriert sind, und
wenn die elektronische Zielsteuereinheit die elektronische Steuereinheit ist, die dafür konfiguriert ist, die Funktion der Fahrerassistenz zu steuern, die zweite Steuereinheit (60) dafür konfiguriert ist, die elektronische Steuereinheit, die dafür konfiguriert ist, die Funktion der Fahrerassistenz zu steuern, die nicht die elektronische Zielsteuereinheit ist, zu veranlassen, die Funktion der Fahrerassistenz als die alternative Funktion auszuführen.

7. Software-Aktualisierungsvorrichtung (50) nach Anspruch 1, wobei:
die elektronischen Steuereinheiten (11, 12, 21, 22) zwei oder mehr elektronische Steuereinheiten umfassen, die zur Steuerung einer Funktion der Peripherieüberwachung konfiguriert sind, und
wenn die elektronische Zielsteuereinheit die elektronische Steuereinheit ist, die dafür konfiguriert ist, die Funktion der Peripherieüberwachung zu steuern, die zweite Steuereinheit (60) dafür konfiguriert ist, die elektronische Steuereinheit, die dafür konfiguriert ist, die Funktion der Peripherieüberwachung zu steuern, die nicht die elektronische Zielsteuereinheit ist, zu veranlassen, die Funktion der Peripherieüberwachung als die alternative Funktion auszuführen.

8. Software-Aktualisierungsvorrichtung (50) nach Anspruch 1, wobei die zweite Steuereinheit (60) dafür konfiguriert ist, die alternative Funktion durch Ausführen einer Funktion auszuführen, die als eine Funktion der Software-Aktualisierungsvorrichtung (50) vorgesehen ist.

9. Softwareaktualisierungsvorrichtung (50) nach Anspruch 1, wobei die zweite Steuereinheit (60) für Folgendes konfiguriert ist:
Erhalten, von der elektronischen Zielsteuereinheit, von Software der elektronischen Zielsteuereinheit, bevor die Aktualisierungs-Software installiert oder installiert und aktiviert wird, und
Ausführen der alternative Funktion, indem sie die erhaltene Software ausführt.

10. Software-Aktualisierungsverfahren, das von einem Computer einer Software-Aktualisierungsvorrichtung (50) ausgeführt wird, die in einem Fahrzeug montiert ist, wobei das Verfahren Folgendes umfasst:
Anfordern eines Downloads von Aktualisierungsdaten von einem Zentrum;
Speichern der durch den Download erhaltenen Aktualisierungsdaten;
Durchführen einer Aktualisierungssteuerung, so dass, basierend auf den Aktualisierungsdaten, Aktualisierungs-Software in einer Installation des Einzelbank-Typs installiert wird, oder in einer Installation des Doppelbank-Typs installiert und aktiviert wird, und zwar in mindestens einer elektronischen Ziel-Steuereinheit unter einer Vielzahl von elektronischen Steuereinheiten (11, 12, 21, 22), die über ein fahrzeuginternes Netzwerk miteinander verbunden sind, wobei es sich bei der Einzelbank-Installation um eine Installation handelt, bei der eine aktuelle Software mit den heruntergeladenen Aktualisierungsdaten in einem Bereich überschrieben wird, der als ein Bereich zum Speichern des Programms aus dem gesamten Speicherbereich der Speichereinheit bestimmt ist, und es sich bei der Doppelbank-Installation um eine Installation handelt, bei der von zwei Bereichen aus dem gesamten Speicherbereich der Speichereinheit, die als Bereiche zum Speichern des Programms bestimmt sind, die heruntergeladenen Aktualisierungsdaten in einen der Bereiche geschrieben werden, der nicht ein Bereich ist, in dem die aktuelle Software gespeichert ist; und
**gekennzeichnet durch**:
im Fall einer Installation vom Doppelbank-Typ dafür konfiguriert ist, Schreiben der heruntergeladenen Aktualisierungsdaten in einen der Bereiche, der nicht ein Bereich ist, in dem die aktuelle Software installiert ist;
Steuern der Ausführung einer alternativen Funktion, die eine Funktion ist, die zumindest einem Teil einer Funktion entspricht, die durch die elektronische Zielsteuereinheit gesteuert wird, wenn ein Betrieb der elektronischen Zielsteuereinheit eingeschränkt ist, während die Aktualisierungsteuerung durchgeführt wird; und
indem die steuernde Ausführung einer alternativen Funktion gestartet wird und dann:
(i) im Fall einer Installation vom Einzelbank-Typ, Ausführen der Installation durch Überschreiben der heruntergeladenen Aktualisierungsdaten in den einen Bereich, der als ein Bereich zum Speichern des Programms bestimmt ist; und
(ii) im Fall einer Doppelbank-Installation, Ausführen der Aktivierung, indem eine Startadresse der heruntergeladenen Aktualisierungsdaten so konfiguriert wird, dass die heruntergeladenen Aktualisierungsdaten ausführbar werden.

11. Nicht-flüchtiges Speichermedium, das ein Software-Aktualisierungsprogramm speichert, das von einem oder mehreren Computern einer Software-Aktualisierungsvorrichtung ausführbar ist und das den einen oder die mehreren Computer veranlasst, das Software-Aktualisierungsverfahren nach Anspruch 10 durchzuführen.

12. Fahrzeug mit der Software-Aktualisierungsvorrichtung nach einem der Ansprüche 1 bis 9.

## Revendications

1. Dispositif de mise à jour de logiciel (50) destiné à être monté dans un véhicule, le dispositif de mise à jour de logiciel (50) comprenant :
une unité de communication (51) configurée pour demander un téléchargement de données de mise à jour à partir d'un centre ;
une unité de stockage (53) configurée pour stocker les données de mise à jour obtenues par le téléchargement ; et
une première unité de commande (52) configurée pour effectuer une commande de sorte que, sur la base des données de mise à jour, un logiciel de mise à jour est installé dans une installation de type à rangée unique, ou installé et activé dans une installation de type à rangée double, dans au moins une unité de commande électronique cible parmi une pluralité d'unités de commande électroniques (11, 12, 21, 22) connectées les unes aux autres via un réseau embarqué, dans lequel l'installation de type à rangée unique est une installation dans laquelle un logiciel actuel est écrasé par les données de mise à jour téléchargées dans une région qui est déterminée comme région pour stocker le programme à partir de toute la région mémoire de l'unité de stockage et
l'installation de type à rangée double est une installation dans laquelle, parmi deux régions de toute la région mémoire de l'unité de stockage qui sont déterminées comme régions pour stocker le programme, les données de mise à jour téléchargées sont écrites dans l'une des régions qui n'est pas une région dans laquelle le logiciel actuel est stocké ; et
**caractérisé par** :
une deuxième unité de commande (60) configurée pour commander l'exécution d'une fonction alternative qui est une fonction équivalente à au moins une partie d'une fonction commandée par l'unité de commande électronique cible lorsqu'un fonctionnement de l'unité de commande électronique cible est limité pendant que la commande est exécutée par la première unité de commande (52) ;
la première unité de commande (52) est configurée dans le cas d'une installation de type à rangée double pour écrire les données de mise à jour téléchargées dans une des régions qui n'est pas une région dans laquelle le logiciel actuel est installé ; et
en ce que l'exécution de la fonction alternative est lancée puis :
(i) dans le cas d'une installation de type à rangée unique, l'exécution de l'installation par la première unité de commande (52) en écrasant les données de mise à jour téléchargées dans la région qui est déterminée comme région pour stocker le programme ; et
(ii) dans le cas d'une installation de type à rangée double, l'exécution de l'activation par la première unité de commande (52) en configurant une adresse de début des données de mise à jour téléchargées de sorte que les données de mise à jour téléchargées deviennent exécutables.

2. Dispositif de mise à jour de logiciel (50) selon la revendication 1, dans lequel la deuxième unité de commande (60) est configurée pour amener au moins l'une des unités de commande électronique autre que l'unité de commande électronique cible à exécuter la fonction alternative.

3. Dispositif de mise à jour de logiciel (50) selon la revendication 1, dans lequel :
les unités de commande électroniques (11, 12, 21, 22) comprennent deux ou plusieurs unités de commande électroniques configurées pour commander les fonctions de mouvement de conduite, de freinage et de direction d'un véhicule ; et
la deuxième unité de commande (60) est configurée pour amener, lorsque l'unité de commande électronique cible est l'unité de commande électronique configurée pour commander au moins une des fonctions de mouvement de conduite, de freinage et de direction du véhicule, l'unité de commande électronique configurée pour commander au moins une des fonctions de mouvement autres que l'unité de commande électronique cible à exécuter l'au moins une des fonctions de mouvement en tant que fonction alternative.

4. Dispositif de mise à jour de logiciel (50) selon la revendication 2, dans lequel la deuxième unité de commande (60) est configurée pour amener l'unité de commande électronique autre que l'unité de commande électronique cible à exécuter la fonction en tant que fonction alternative à condition qu'une opération prédéterminée par un utilisateur soit reçue.

5. Dispositif de mise à jour de logiciel (50) selon la revendication 3, dans lequel la deuxième unité de commande (60) est configurée pour amener l'unité de commande électronique configurée pour commander un frein de service à commander le frein de service de sorte que le véhicule soit maintenu dans un état stationnaire lorsque l'unité de commande électronique cible est un dispositif embarqué configuré pour commander un frein de stationnement de sorte que le véhicule est maintenu dans l'état stationnaire.

6. Dispositif de mise à jour de logiciel (50) selon la revendication 1, dans lequel :
les unités de commande électroniques (11, 12, 21, 22) comprennent deux ou plusieurs unités de commande électroniques configurées pour commander une fonction d'assistance à la conduite, et la deuxième unité de commande (60) est configurée pour amener, lorsque l'unité de commande électronique cible est l'unité de commande électronique configurée pour commander la fonction d'assistance à la conduite, l'unité de commande électronique configurée pour commander la fonction d'assistance à la conduite autre que l'unité de commande électronique cible à exécuter la fonction d'assistance à la conduite en tant que fonction alternative.

7. Dispositif de mise à jour de logiciel (50) selon la revendication 1, dans lequel :
les unités de commande électroniques (11, 12, 21, 22) comprennent deux ou plusieurs unités de commande électroniques configurées pour commander une fonction de surveillance périphérique ; et
la deuxième unité de commande (60) est configurée pour amener, lorsque l'unité de commande électronique cible est l'unité de commande électronique configurée pour commander la fonction de surveillance périphérique, l'unité de commande électronique configurée pour commander la fonction de surveillance périphérique autre que l'unité de commande électronique cible à exécuter la fonction de surveillance périphérique comme fonction alternative.

8. Dispositif de mise à jour de logiciel (50) selon la revendication 1, dans lequel la deuxième unité de commande (60) est configurée pour exécuter la fonction alternative en exécutant une fonction fournie en tant que fonction du dispositif de mise à jour de logiciel (50).

9. Dispositif de mise à jour de logiciel (50) selon la revendication 1, dans lequel la deuxième unité de commande (60) est configurée pour
acquérir, auprès de l'unité de commande électronique cible, le logiciel de l'unité de commande électronique cible avant que le logiciel de mise à jour ne soit installé, ou installé et activé, et exécuter la fonction alternative en exécutant le logiciel acquis.

10. Procédé de mise à jour de logiciel exécuté par un ordinateur d'un dispositif de mise à jour de logiciel (50) monté dans un véhicule, le procédé comprenant :
la demande d'un téléchargement de données de mise à jour à partir d'un centre ;
le stockage des données de mise à jour obtenues par le téléchargement ;
l'exécution d'une commande de mise à jour de sorte que, sur la base des données de mise à jour,
un logiciel de mise à jour est installé dans une installation de type à rangée unique, ou installé et
activé dans une installation de type à rangée double, dans au moins une unité de commande électronique cible parmi une pluralité d'unités de commande électroniques (11, 12, 21, 22) connectées les unes aux autres via un réseau embarqué, dans lequel l'installation de type à rangée unique est une installation dans laquelle un logiciel actuel est écrasé par les données de mise à jour téléchargées dans une région qui est déterminée comme une région pour stocker le programme à partir de la région mémoire entière de l'unité de stockage et l'installation de type à rangée double est une installation dans laquelle, parmi deux régions de l'ensemble de la région mémoire de l'unité de stockage déterminées comme régions de stockage du programme, les données de mise à jour téléchargées sont écrites dans l'une des régions qui n'est pas une région dans laquelle le logiciel actuel est stocké ; et
**caractérisé par** :
dans le cas d'une installation de type à rangée double, l'écriture des données de mise à jour téléchargées dans l'une des régions qui n'est pas une région dans laquelle le logiciel actuel est installé ;
la commande de l'exécution d'une fonction alternative qui est une fonction équivalente à au moins une partie d'une fonction commandée par l'unité de commande électronique cible lorsqu'une opération de l'unité de commande électronique cible est limitée pendant que la commande de mise à jour est en cours d'exécution ; et
par la commande de l'exécution d'une fonction alternative en cours de début, puis :
(i) dans le cas d'une installation de type à rangée unique, l'exécution de l'installation en écrasant les données de mise à jour téléchargées dans la région qui est déterminée comme région pour stocker le programme, et
(ii) dans le cas d'une installation de type à rangée double, l'exécution de l'activation en configurant une adresse de début des données de mise à jour téléchargées de sorte que les données de mise à jour téléchargées deviennent exécutables.

11. Support de stockage non transitoire stockant un programme de mise à jour de logiciel qui est exécutable par un ou plusieurs ordinateurs d'un dispositif de mise à jour de logiciel et qui amène l'un ou plusieurs ordinateurs à exécuter le procédé de mise à jour de logiciel selon la revendication 10.

12. Véhicule comprenant le dispositif de mise à jour logicielle selon l'une quelconque des revendications 1 à 9.
